# EUROPÄISCHE PATENTSCHRIFT

(11) **EP 3 083 266 B1**
(45) Veröffentlichungstag und Bekanntmachung des Hinweises auf die Patenterteilung: **14.04.2021**
(21) Anmeldenummer: 14827713.0
(22) Anmeldetag: 12.12.2014
(51) Int. Cl.: B60B 3/04, B60B 5/02, B60B 21/00, B60B 23/06, B60B 23/12, B29C 70/00, B29L 31/32, B29C 70/46, B29C 70/86, B60B 23/10

(54) **VERFAHREN ZUR HERSTELLUNG EINER RADFELGE MIT EINEM FELGENBETT AUS FASERVERBUNDMATERIAL**
METHOD FOR PRODUCING A WHEEL RIM HAVING A RIM BASE, FROM A FIBRE COMPOSITE
PROCÉDÉ DE FABRICATION D'UNE JANTE DE ROUE COMPORTANT UN FOND DE JANTE EN MATÉRIAU COMPOSITE RENFORCÉ PAR DES FIBRES

(30) Priorität: 18.12.2013 DE 102013114343
(43) Veröffentlichungstag der Anmeldung: 26.10.2016
(73) Patentinhaber: ThyssenKrupp Carbon Components GmbH, 01723 Wilsdruff STT Kesselsdorf (DE)
(72) Erfinder: WERNER, Jens, 01640 Coswig (DE); KÖHLER, Christian, 01099 Dresden (DE); MÄKE, Sandro, 01796 Dohma (DE); DRESSLER, Michael, 01159 Dresden (DE); BARTSCH, André, 01159 Dresden (DE)
(86) Internationale Anmeldenummer: PCT/DE2014/100445
(87) Internationale Veröffentlichungsnummer: WO 2015/090276

(56) Entgegenhaltungen:
- EP-A1- 0 799 722
- EP-A1- 2 607 097
- AU-B2- 524 458
- DE-A1-102010 010 512
- DE-A1-102011 120 361
- US-B1- 6 296 320

## Beschreibung

Die Erfindung betrifft ein Verfahren zur Herstellung einer Radfelge mit einem Felgenbett aus Faserverbundwerkstoff.

Derartige Radfelgen sind Bestandteile von mehrteiligen Leichtbau-Rädern insbesondere für Kraftfahrzeuge. Die Leichtbau-Räder weisen neben der Radfelge im Wesentlichen eine Radscheibe aus Faserverbundmaterial oder aus einem beliebigen anderen Material auf, letztere werden auch Leichtbau-Hybrid-Räder genannt. Die Radscheiben der Leichtbau-Räder sind meist tellerförmig oder sternförmig ausgebildet, wobei die tellerförmigen Radscheiben geschlossene oder durchbrochene Speichenfelder aufweisen können.

Die bekannten Herstellungsverfahren zur Herstellung der mehrteiligen Räder, insbesondere in hybrider Bauweise, sind aufwändig. Die bei der Herstellung geschaffene Verbindung zwischen der Radfelge und der Radscheibe erreicht trotz des technologischen Aufwandes zum Teil nicht die gewünschte Betriebssicherheit.

Aus der Druckschrift DE 10 2010 010 512 A1 ist ein Verfahren zur Fertigung eines hohlprofilartigen Bauteils, insbesondere einer Radfelge, bekannt, bei dem eine Radscheibe während der Fertigung des Felgenbetts aus Faserverbundwerkstoff mit diesem form- und stoffschlüssig verbunden wird.

Bei der Vorfertigung der Preform des Felgenbetts wird die Radscheibe in das Formwerkzeug für die Felgenbettfertigung integriert und mit dem Felgenbett formschlüssig verbunden. Im anschließenden Konsolidierungsprozess wird die Preform des Felgenbetts mit Matrixmaterial infiltriert und unter Wärmebehandlung das Felgenbett mit der Radscheibe stoffschlüssig verbunden.

Ein ähnliches Verfahren ist aus der Druckschrift DE 10 2011 120 361 A1 bekannt, bei dem ein radialer Randbereich einer Radscheibe aufspreizbare Teillagen mit Fügezonen aufweist, wobei die Fügezonen des Randbereichs der Radscheibe während der Fertigung der Preform des Felgenbetts aus Faserverbundmaterial mit dem Felgenbett formschlüssig verbunden werden.

Dieses Verfahren erfordern aufwendige Werkzeugsysteme zur prozesstechnischen Integration der Radscheibe in das Fertigungsverfahren des Felgenbetts. Änderungen an der Geometrie der Radscheibe wirken sich maßgeblich auf die Gestaltung des Formwerkzeugs aus und erfordern zu weiten Teilen neue Formwerkzeuge, weshalb eine Gestaltungsflexibilität mit hohen Fertigungskosten verbunden ist.

Bei der Anwendung der Verfahren für die Fertigung insbesondere hybrider Räder mit metallischen oder teilweise metallischen Radscheiben steht das Material der Radscheibe unter einer hohen thermischen Belastung durch die Fertigungstemperaturen. Aufgrund der unterschiedlichen Dehnungseigenschaften der Materialien von Felgenbett und Radscheibe können sich unerwünschte Eigenspannungen in den Bauteilen oder Passungenauigkeiten im gefertigten Rad ergeben.

Der Erfindung liegt daher die Aufgabe zugrunde, unter Beseitigung der Nachteile des Standes der Technik die Herstellung der Radfelge zu verbessern, insbesondere mit geringem ökonomischem und technischem Aufwand funktionssichere Radkonstruktionen zu gewährleisten.

Die Aufgabe wird dadurch gelöst, dass während der Fertigung des Felgenbetts ein Anschlusselement mit dem Felgenbett verbunden wird, wobei das Anschlusselement derart ausgebildet und angeordnet wird, dass an dem Anschlusselement eine Radscheibe anschließbar ist.

Nach dem erfindungsgemäßen Verfahren kann das Anschlusselement beispielsweise an eine vorgefertigte Preform des Felgenbettes angefügt werden, die anschließend mit Matrixmaterial infiltriert wird.

Alternativ wird das Anschlusselement an eine bereits getränkte Preform (Prepeg) des Felgenbetts angefügt. In beiden Fällen wird im anschließenden Konsolidierungsprozess unter Wärmebehandlung im Heißwerkzeug das Felgenbett ausgehärtet und dabei mit dem Anschlusselement verklebt und stoffschlüssig verbunden. An das am Felgenbett angefügte Anschlusselement kann nachfolgend der Anschluss einer Radscheibe mittels üblicher Fügetechnologien erfolgen.

Damit wird eine vorgefertigte Einheit einer Radfelge für eine autarke Montage von individuellen Radscheiben außerhalb des Fertigungs- und Fügeprozesses des Felgenbetts bereitgestellt.

Durch die prozessintegrierte Anbindung eines Anschlusselements an das Felgenbett aus Faserverbundmaterial werden die Vorzüge des bewährten festen und zuverlässigen Fügens mit dem Felgenbett genutzt, wobei darüber hinaus die Radscheibe in flexibler Weise ohne besondere Rücksichtnahme auf die Gestalt und die Materialeigenschaften des Faserverbundmaterials des Felgenbetts aus beliebigen Materialien bestehen kann und mit allen üblichen und bewährten Fügetechniken (Löten, Schweißen, Nieten, Schrauben, Kleben, Einpressen)an das Anschlusselement angebracht werden.

Die Montage der Radscheibe kann unabhängig und technologisch losgelöst vom Fertigungsprozess zur Herstellung der Radfelge erfolgen, woraus sich weitere Vorteile bei der Herstellung des Rades ergeben.

So wird die Radscheibe selbst von dem Verfahren des prozessintegrierten Fügens bei der Fertigung des Felgenbetts aus Faserverbundwerkstoff separiert und vor allem von den mechanischen, chemischen und insbesondere thermischen Belastungen ausgenommen, die durch das prozessintegrierte Fügen mit dem Felgenbett aus Faserverbundmaterial, insbesondere bei einer gemeinsamen Konsolidierung, entstehen.

Die im Stand der Technik als nachteilig zu beobachtenden ungünstigen Eigenspannungen und Passungenauigkeiten, die durch ein unterschiedliches Dehnungs- und Schrumpfungsverhalten von insbesondere metallischen Radscheiben in Verbindung mit dem Felgenbett aus Faserverbundmaterial während des direkten integrierten Fertigungsprozesses und bei der nachfolgenden Abkühlphase entstehen können, sind durch das erfindungsgemäße Verfahren deutlich gemindert.

Aufgrund der gegenüber einer Radscheibe geringeren Masse und Steifigkeit des Anschlusselements erzeugt das unterschiedliche Dehnungs- und Schrumpfungsverhalten von Felgenbett in Verbindung mit insbesondere einem metallischen Anschlusselement weniger Spannungen im Felgenbett.

Die Montage der Radscheibe kann separat unter Raumtemperatur-Bedingungen an die vorgefertigte Radfelge erfolgen, wodurch ebenfalls Spannungen in der Radkonstruktion gemindert werden.

Vorzugsweise weist das Anschlusselement wenigstens eine Anschlussfläche auf, die zu einer bzw. jeweils einer Anschlussfläche der Radscheibe korrespondierend ausgebildet und angeordnet wird.

Bei der Befestigung der Radscheibe an das Anschlusselement kontaktieren die Anschlussfläche(n) der Radscheibe lediglich die korrespondierende Anschlussfläche des Anschlusselements.

Der Kraftfluss im Betrieb des Rades erfolgt somit vom Felgenbett ausschließlich über das Anschlusselement in die Radscheibe und umgekehrt.

Hierdurch eröffnen sich zudem Anwendungsmöglichkeiten, bei dem das mit dem Felgenbett verbundene Anschlusselement verschiedene nützliche Separations- und Trennfunktionen der Radscheibe gegenüber dem Felgenbett übernimmt.

So werden Dehnungserscheinungen während des Betriebes der Radscheibe ausschließlich vom Anschlusselement aufgenommen und können bei der Übertragung in das Felgenbett besser kompensiert werden.

In einer vorteilhaften Ausgestaltung des Verfahrens wird das Anschlusselement während der Vorfertigung einer Preform des Felgenbettes einem Formwerkzeug des Felgenbetts beigeordnet und mit der Preform, vorzugsweise formschlüssig, verbunden.

Die Vorfertigung der Preform erfolgt durch Ablage von Fasermaterial auf ein Formwerkzeug. Das Anschlusselement wird dabei als Auflage bzw. Einlage dem Formwerkzeug des Felgenbettes beigeordnet und während Ablage des Fasermaterials auf das Formwerkzeug und das beigeordnete Anschlusselement mit der hierbei gebildeten Preform verbunden. Vorzugsweise geschieht das unter Bildung von Hinterschneidungen durch Einschlüsse der Kontur des Anschlusselementes in das Fasermaterial, wonach sich ein sicherer formschlüssiger Verbund ergibt.

Anschließend wird die Preform mit Matrixmaterial infiltriert und unter Wärmebehandlung im Heißwerkzeug ausgehärtet, wobei das Felgenbett mit dem Anschlusselement stoffschlüssig verbunden wird.

Durch die prozessintegrierte, form- und stoffschlüssige Anbindung eines Anschlusselements an das Felgenbett aus Faserverbundmaterial bleiben die Vorzüge einer besonders festen und zuverlässigen Verbindung mit dem Felgenbett erhalten und werden für den nachfolgenden Anschluss der Radscheibe und für die fertiggestellte Radkonstruktion genutzt.

Diese vorteilhafte Ausführung des erfindungsgemäßen Verfahrens verringert des Weiteren den Aufwand der Fertigung der Radfelge, da weitestgehend einheitliche Formwerkzeuge verwendet werden können, die neben dem Felgenbett lediglich das zu integrierende Anschlusselement abbilden, welches im Verhältnis zu Radscheibe grazil und nahezu universell gestaltet sein kann.

Änderungen an der Geometrie der Radscheibe wirken sich weniger kostenintensiv auf die Formwerkzeuge aus, was unter geringem Aufwand eine größere Flexibilität bei der Gestaltung der Radscheibe ermöglicht.

Eine besonders vorteilhafte Ausgestaltung des Verfahrens sieht vor, dass für das Anschlusselement ein Material verwendet wird, welches einen im Verhältnis zum thermischen Ausdehnungskoeffizient des Faserverbundwerkstoffs des Felgenbettes zumindest ähnlichen thermischen Ausdehnungskoeffizient aufweist.

Während der Konsolidierung des Felgenbetts und der Verbindung mit dem Anschlusselement werden die Bauteile stark erhitzt und gemeinsam aufgeweitet. Infolge der ähnlichen bis gleichen Ausdehnungseigenschaften von Felgenbett und Anschlusselement kann die Aufweitung wie auch die Schrumpfung während der anschießenden Abkühlung im gleichen Maße und spannungsfrei erfolgen. Damit werden verfahrensbedingte Eigenspannungen im Felgenbett bzw. verfahrensbedingte Passungenauigkeiten zwischen dem Felgenbett und dem Anschlusselement weitestgehend vermieden und die Spannungsverteilung in der Verbindung verbessert.

Ähnliche bis gleiche Ausdehnungseigenschaften wie das Faserverbundmaterial weisen beispielsweise spezielle Stahllegierungen, wie die unter der Bezeichnung Invar® oder Pernifer® bekannten Stahllegierungen, auf.

Diese erfindungsgemäße Ausführung der Radfelge ist auch während des Betriebseinsatzes des fertigen Rades von Vorteil, da unter der thermischen Belastung (z.B. durch Bremswärme) des Rades ein annähernd gleiches Wärmedehnungsverhalten des Anschlusselements und des Felgenbetts vorherrscht. Infolge des annähernd gleichen Dehnungsverhaltens von Anschlusselement und Felgenbett wird eine ausgleichende Verformung beider Bauteile erreicht, wodurch Spannungen im Felgenbett vermieden werden, die zu Rissen im Faserverbundmaterial des Felgenbettes führen können.

Es wird im Belastungsfall des Rades lediglich eine Spannung zwischen der Radscheibe und dem Anschlusselement erzeugt, wobei das kraftaufnehmende Anschlusselement die Wärmedehnungskompensation übernimmt. Hierdurch kann die Belastung der Radkonstruktion zusätzlich verringert werden.

Vorteilhafter Weise wird das Anschlusselement im Bereich des Tiefbetts des Felgenbetts mit dem Felgenbett verbunden. Damit wird allein durch diese Anordnung eine innenseitig im Felgenhohlraum des Felgenbetts herausragende Position des Anschlusselements gegenüber der übrigen inneren Kontur des Felgenbetts geschaffen, die es auf einfache Weise ermöglicht, die Anschlussfläche für den Anschluss der Radscheibe abgesetzt und in einer gewissen Distanz zur übrigen inneren Kontur des Felgenbetts bereitzustellen. Der Felgenhohlraum der Radfelge wird durch die umlaufende, innere Kontur des Felgenbetts gebildet, wobei das Tiefbett den inneren Felgenhohlraum verengt.

In einer bevorzugten Ausführungsform ist vorgesehen, dass das Anschlusselements in dem Felgenhohlraum der Radfelge erstreckt ausgebildet und angeordnet wird.

Damit wird ein das Felgenbett innenseitig überragender, partieller Überstand des Anschlusselements geschaffen, so dass eine oder mehrere, gegenüber der inneren Kontur des Felgenbetts abgesetzte, in den Felgenhohlraum weisende und / oder erstreckte Anschlussflächen für den Anschluss der Radscheibe bereitgestellt werden können, die die Vielfalt der Befestigungsmöglichkeiten und die Zuverlässigkeit der Anbindung der Radscheibe erhöht.

Durch insbesondere die sich in den Felgenhohlraum erstreckenden, schräg oder seitwärts weisenden Anschlussflächen wird eine ergänzende, axial wirkende Abstützung der Radscheibe ermöglicht, die für eine homogene Verteilung des Lasteintrages auf das Felgenbett sorgt.

Die Radscheibe kann z.B. durch eine betriebssichere Klemm- oder Schraubverbindung axial gegen die seitlichen Anschlussflächen des Anschlusselements verspannt werden.

So können die durch die betriebsbedingte Wärmedehnung der Radscheibe entstehenden Kräfte weitestgehend durch einen Reibschluss an den korrespondierenden seitlichen Anschlussflächen zwischen der Radscheibe und dem lastaufnehmenden Anschlusselement auf das Anschlusselement übertragen werden.

Der nach innen gerichtete Überstand des Anschlusselements bietet zudem den Vorteil, die Radscheibe mit einfachen Mitteln in einer zum Felgenbett berührungsfreien, belastungsarmen Position anordnen zu können.

Die Radscheibe kann so genügend beabstandet angefügt werden, dass sie lediglich das Anschlusselement kontaktiert und sich auch unter der thermischen Ausdehnung während des Betriebseinsatzes des Rades nur gegen das Anschlusselement abstützt.

Der Kraftfluss im Betrieb des Rades erfolgt somit vom Felgenbett ausschließlich über das Anschlusselement in die Radscheibe und umgekehrt.

Hierdurch wird ein ungünstiger Reibschluss der Radscheibe mit dem Felgenbett und damit Schwingreibverschleiß am Faserverbundmaterial vermieden. Die Verbindung zwischen Radscheibe und Radfelge wird unter den Betriebsbedingungen verschleißärmer und zuverlässiger.

Wird das nach innen gerichtete Anschlusselement während der Vorfertigung der Preform des Felgenbettes mit der Preform verbunden, kann eine Beiordnung des Anschlusselements zum Formwerkzeug beispielsweise durch eine Anordnung zwischen zwei beabstandeten Teilen des Formwerkzeugs des Felgenbetts erfolgen, so dass die zur Kontur des Felgenbetts abgesetzte Kontur des Anschlusselementes nach innen gerichtet positionierbar ist.

Diese Anordnung realisiert bereits beim gemeinsamen Fügen des Felgenbetts mit dem Anschlusselement den vorbeschriebenen, die innere Kontur des Felgenbettes überragenden Überstand des Anschlusselements.

Wird das Anschlusselement während der Vorfertigung der Preform des Felgenbetts einer entsprechenden Ausnehmung des Formwerkzeugs beigeordnet, kann mit einfachen Mitteln das Anschlusselement so angeordnet werden, dass der Überstand des Anschlusselements gegenüber der inneren Kontur des Felgenbetts ausgebildet wird.

Das Anschlusselement mit der erfindungsgemäßen konstruktiven Gestaltung und Fertigung kann unter Verwendung besonderer Materialien weitere Separations- und Trennfunktionen übernehmen, die das Felgenbett mechanisch, chemisch oder thermisch von der Radscheibe abschirmen.

Vorzugsweise wird das Anschlusselement aus glasfaserverstärktem Kunststoff (GFK) gebildet. Dieses Material weist gute Klebeeigenschaften, eine geringe Steifigkeit und eine im Verhältnis zu seinem Gewicht hohe Festigkeit auf. Das Material geht einen sehr guten stofflichen Verbund mit dem Faserverbundmaterial des Felgenbetts ein, fördert die Leichtbau-Weise und gewährleistet eine sichere Befestigung der Radscheibe an das Anschlusselement.

Infolge der geringen Steifigkeit des GFK, weist das Anschlusselement einen geringen Verformungswiderstand auf, der sich bei der Wärmebehandlung im integrativen Fertigungsprozess des Felgenbetts des Weiteren spannungsmindernd auswirkt.

Ein hoher Wärmeleitwiderstand des GFK sorgt des Weiteren dafür, dass das Anschlusselement den Wärmeeintrag in das Felgenbett infolge beispielsweise thermisch belastender Fügetechniken beim Anbringen der Radscheibe oder einer betriebsbedingt erzeugten Bremswärme der Radscheibe gut kompensieren und damit Spannungen im Felgenbett vermindert kann.

Bei einer weiteren vorteilhaften Ausgestaltung wird im Fügebereich zwischen dem Felgenbett und dem Anschlusselement eine Zwischenschicht ausgebildet.

Die Zwischenschicht kann beispielsweise bei der Vorfertigung zur Bildung der Preform des Felgenbettes vor der Faserablage auf dem Anschlusselement aufgelegt werden.

Die Zwischenschicht kann vor oder während der Konsolidierung des Faserverbundmaterials des Felgenbetts mit dem Felgenbett und dem Anschlusselement stoffschlüssig verklebt.

Alternativ kann die dem Felgenbett zugewandten Kontaktfläche des Anschlusselements vor der Fertigung des Felgenbetts, insbesondere vor dem Fügen des Anschlusselementes mit dem Felgenbett beschichtet werden. Mittels der Beschichtung können besonders dünne Schichten aufgetragen werden.

In dieser Weise kann die Zwischenschicht mit geringem Aufwand und hoher Festigkeit zwischen dem Felgenbett und dem Anschlusselement in die Radfelge integriert werden.

Diese Zwischenschicht kann alternativ oder in Kombination mit dem Anschlusselement spezielle Separations- und Trennfunktionen übernehmen, die das Felgenbett während der Fertigung der Radkonstruktion und auch im Betriebszustand mechanisch, chemisch oder thermisch von der Radscheibe abschirmen und die Wahlfreiheit für die Wahl des Materials des Anschlusselements oder Radscheibe erhöhen.

Alternativ oder zusätzlich wird auf der Anschlussfläche des Anschlusselementes eine Zwischenschicht ausgebildet.

Vorzugsweise wird die Anschlussfläche des Anschlusselementes mit der Zwischenschicht beschichtet. Die Beschichtung der Anschlussfläche kann unabhängig von der Fertigung des Felgenbetts erfolgen.

Die Zwischenschicht wird in einer vorteilhaften Ausführungsform aus einem Material gebildet, welches einen im Verhältnis zum Wärmeleitwiderstand des Materials des Anschlusselementes größeren Wärmeleitwiderstand aufweist. Eine Zwischenschicht aus einem Material mit derart hohem Wärmeleitwiderstand, wie z. B. eine Zwischenschicht aus einem Elastomer, aus glasfaserverstärktem Kunststoff (GFK) oder Keramik, erzeugt einen thermischen Widerstand, der die Übertragung von fertigungs- oder betriebsbedingten Wärmelasten auf das Felgenbett hemmt, was des Weiteren Schädigung des Faserverbundmaterials und Spannungen im Felgenbett vermindert.

Durch eine solche Zwischenschicht - entsprechend angeordnet - kann insbesondere ein Wärmeeintrag aus der Radscheibe auf das Felgenbett, welcher z. B. durch thermische Fügetechniken - wie dem Schweißen- zur Anbringung der Radscheibe an das metallische Anschlusselement erfolgt, gut kompensiert werden.

Eine Zwischenschicht aus einem Elastomer oder aus GFK kann als Klebeschicht zwischen dem Felgenbett und dem Anschlusselement ausgebildet werden, wobei sich der Elastomer und das GFK durch guten Klebeeigenschaften auszeichnet, die eine feste stoffliche Verbindung der Zwischenschicht mit dem Felgenbett und dem Anschlusselement bewirken.

Insbesondere GFK ist infolge des günstigen Verhältnisses von Gewicht und Festigkeit als Material für die Zwischenschicht geeignet, so dass auch isolierende Zwischenschichten mit größeren Schichtdicken problemlos ausgeführt werden können.

Wird das Anschlusselement aus einem Material gebildet, welches einen im Verhältnis zum Wärmeleitwiderstand des Materials der anzuschließenden Radscheibe größeren Wärmeleitwiderstand aufweist, können ebensolche vorteilhafte Wirkungen erzielt werden, insbesondere kann durch die verfahrenstechnische Vorsorge das Felgenbett günstig vor späteren thermischen Belastungen durch die im Betrieb des Rades einwirkende Bremswärme geschützt werden.

Diese und weitere aus den Patentansprüchen, der Beschreibung der Ausführungsbeispiele und den Zeichnungen hervorgehenden Merkmale können jeweils für sich oder in Kombination als vorteilhafte Ausführungsformen der Erfindung verwirklicht sein, für die hier Schutz beansprucht wird.

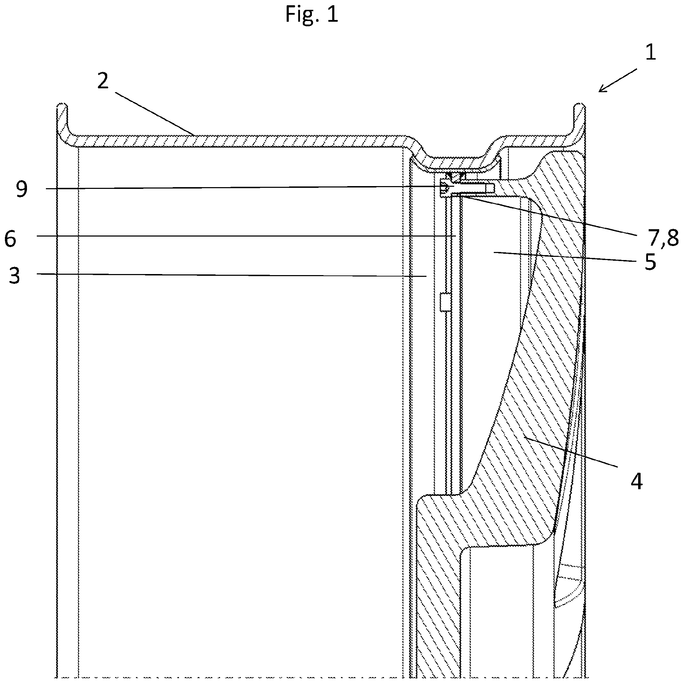

Das erfindungsgemäße Verfahren wird nachfolgend an Ausführungsbeispielen näher erläutert. Die zugehörigen Zeichnungen zeigen in einer schematischen Darstellung in
- Fig. 1: eine teilweise Schnittdarstellung einer erfindungsgemäß hergestellten Radfelge mit einem ringförmigen Anschlusselement und einer daran angeschlossenen Radscheibe,
- Fig. 2: eine teilweise Schnittdarstellung eines zweiteiligen Formwerkzeuges und des ringförmigen Anschlusselements in einer ersten Fertigungsphase der Radfelge nach Fig. 1,
- Fig. 3: eine teilweise Schnittdarstellung der Werkzeugeinheit mit dem beigeordneten, ringförmigen Anschlusselement in einer zweiten Fertigungsphase der Radfelge nach Fig. 1,
- Fig. 4: eine teilweise Schnittdarstellung der Werkzeugeinheit mit dem umschlossenen, ringförmigen Anschlusselement in einer dritten Fertigungsphase der Radfelge nach Fig. 1,
- Fig. 5: eine teilweise Schnittdarstellung der fertiggestellten Radfelge mit dem verbundenen ringförmigen Anschlusselement nach Fig. 1,
- Fig. 6: eine isometrische Darstellung der Radfelge nach Fig. 1 mit der anzuschließenden Radscheibe,
- Fig. 7: eine teilweise Schnittdarstellung einer erfindungsgemäß hergestellten Radfelge nach einem zweiten Ausführungsbeispiel mit einem ringförmigen Anschlusselement in einer zweiten Ausführung und einer daran angeschlossenen Radscheibe,
- Fig. 8: eine teilweise Schnittdarstellung eines zweiteiligen Formwerkzeuges und des ringförmigen Anschlusselement nach Fig. 7 der Radfelge nach Fig. 7
- Fig. 9: eine teilweise Schnittdarstellung der Werkzeugeinheit mit dem umschlossenen, ringförmigen Anschlusselement in einer fortgeschrittenen Fertigungsphase der Radfelge nach Fig. 7,
- Fig. 10: eine teilweise Schnittdarstellung der fertiggestellten Radfelge mit dem verbundenen ringförmigen Anschlusselement nach Fig. 7,
- Fig. 11: eine teilweise Schnittdarstellung einer erfindungsgemäß hergestellten Radfelge nach einem dritten Ausführungsbeispiel mit einem ringförmigen Anschlusselement in einer dritten Ausführung und einer angeschlossenen Radscheibe,
- Fig. 12: eine teilweise Schnittdarstellung einer erfindungsgemäß hergestellten Radfelge nach einem vierten Ausführungsbeispiel mit einem mehrteiligem Anschlusselement und einer angeschlossenen Radscheibe,
- Fig. 13: eine teilweise Schnittdarstellung einer erfindungsgemäß hergestellten Radfelge nach einem fünften Ausführungsbeispiel mit einem ringförmigen Anschlusselement in einer vierten Ausführung und einer angeschlossenen Radscheibe,
- Fig. 14: eine teilweise Schnittdarstellung einer erfindungsgemäß hergestellten Radfelge nach einem sechsten Ausführungsbeispiel mit ringsegmentförmigen Anschlusselementen und einer angeschlossenen Radscheibe,
- Fig. 15: eine isometrische Darstellung eines zweiteiligen Formwerkzeuges und der ringsegmentförmigen Anschlusselemente zur Fertigung der Radfelge nach Fig. 14
- Fig. 16: eine isometrische Darstellung der Radfelge nach Fig. 14 mit der anzuschließenden Radscheibe.
Aus Fig. 1 ist eine erfindungsgemäß hergestellte Radfelge 1 nach einem ersten Ausführungsbeispiel mit einem Felgenbett 2 aus kohlefaserverstärktem Kunststoff (CFK) und einem ringförmigen Anschlusselement 3 aus Edelstahl ersichtlich, das während der Fertigung des Felgenbetts 2 mit dem Felgenbett 2 verbunden wird. An dem Anschlusselement 3 der Radfelge 1 wird nachfolgend eine tellerförmige Radscheibe 4 mit durchbrochenem Speichenfeld und einem Speichenring 5 aus Aluminium angeschlossen. Fig. 1 zeigt den Endzustand einer Radmontage mit der an der erfindungsgemäßen Radfelge 1 angeschlossenen Radscheibe 4. Das Anschlusselement 3 weist einen umlaufenden, radial nach innen in den Felgenhohlraum der Radfelge 1 erstreckten Flanschring 6 auf, an dessen seitlichen, axial weisenden Anschlussfläche 7 die Stirnfläche 8 des Speichenringes 5 der Radscheibe 1 angelegt werden kann und der Speichenring 5 mittels mehrere, über den Umfang verteilt angeordneter Befestigungsschrauben 9 befestigt werden kann.

Die Radfelge 1 mit dem ringförmigen Anschlusselement 3 wird als eine vorgefertigte Einheit bereitgestellt zur Anbindung von nach Form und Material beliebigen Radscheiben in beliebiger Weise. Alternativ zu der Radscheibe 1 nach diesem Ausführungsbeispiel können z.B. auch sternförmige Radscheiben mit Speichenenden oder Radscheiben aus Stahl oder Faserverbundmaterial angebracht werden. Alternativ zur beschriebenen Schraubverbindung kann die Radscheibe 1 an das Anschlusselement 3 z.B. angenietet, angeschweißt oder angelötet werden oder in das Anschlusselement 3 eingepresst werden.

Zur Realisierung einer festen Verbindung der Radscheibe 4 mit dem Felgenbett 2 wird anstelle der Radscheibe 4 das erfindungsgemäße Anschlusselement 3 in den Fertigungsprozess zur Fertigung des Felgenbetts 2 integriert und während der Fertigung des Felgenbetts 2 fest mit dem Felgenbett 2 verbunden.

Die Befestigung der Radscheibe 4 erfolgt nur mittelbar an das Felgenbett 2, ohne Beeinflussung der Radscheibe 4 durch die Herstellung des Felgenbetts 2 und ohne Beeinflussung des Felgenbetts 2 durch die Befestigung der Radscheibe 4, wodurch fertigungsbedingte Spannungen in der Radkonstruktion erheblich gemindert werden.

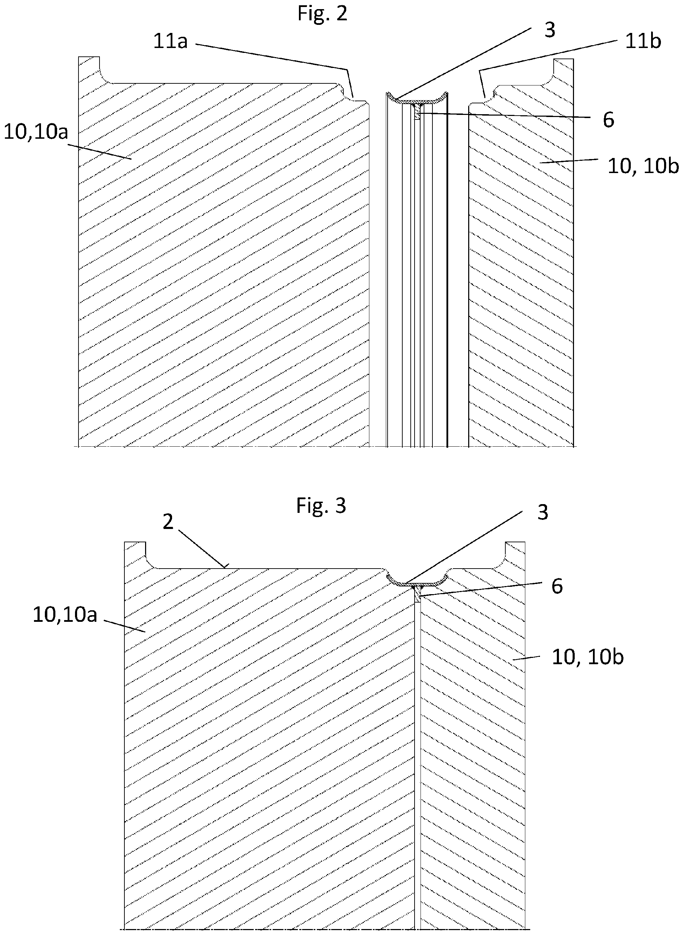

In den Figuren 2 bis 5 werden verschiedene Fertigungsphasen der erfindungsgemäßen Herstellung der Radfelge nach Fig. 1 dargestellt.

In einer ersten Fertigungsphase nach Fig. 2 wird ein zweiteiliges Formwerkzeug 10 zur Fertigung einer Preform des Felgenbetts 2 und das mit dem Flanschring vorgefertigte, ringförmige Anschlusselements aus Edelstahl bereitgestellt. Die Teilwerkzeuge 10a, 10b des Formwerkzeugs 10 bilden jeweils einen Teil der Kontur des Felgenbetts 2 ab und weisen eine passende Ausnehmung 11a, 11b nach der Kontur des vorgefertigten, ringförmigen Anschlusselements 3 auf.

Nachfolgend wird das ringförmige Anschlusselement 3 mit dem Flanschring 6 den Teilwerkzeugen 10a, 10b beigeordnet und die Teilwerkzeuge 10a, 10b unter Zwischenlage des Anschlusselements 3 zusammengefügt. Fig. 3 zeigt die Position des Anschlusselements 3 in Zuordnung zum Formwerkzeug 10. Das Anschlusselement 3 ist in einem Bereich angeordnet, in dem das Tiefbett des Felgenbetts 2 ausgeformt wird und bildet auf einer dem Felgenbett 2 zugewandten Oberfläche die innere Kontur des Tiefbetts ab. Der radial nach innen erstreckte Flanschring 6 mit der Anschlussfläche 7 ist in einem verbleibenden Zwischenraum der Teilwerkzeuge 10a, 10b radial nach innen weisend angeordnet.

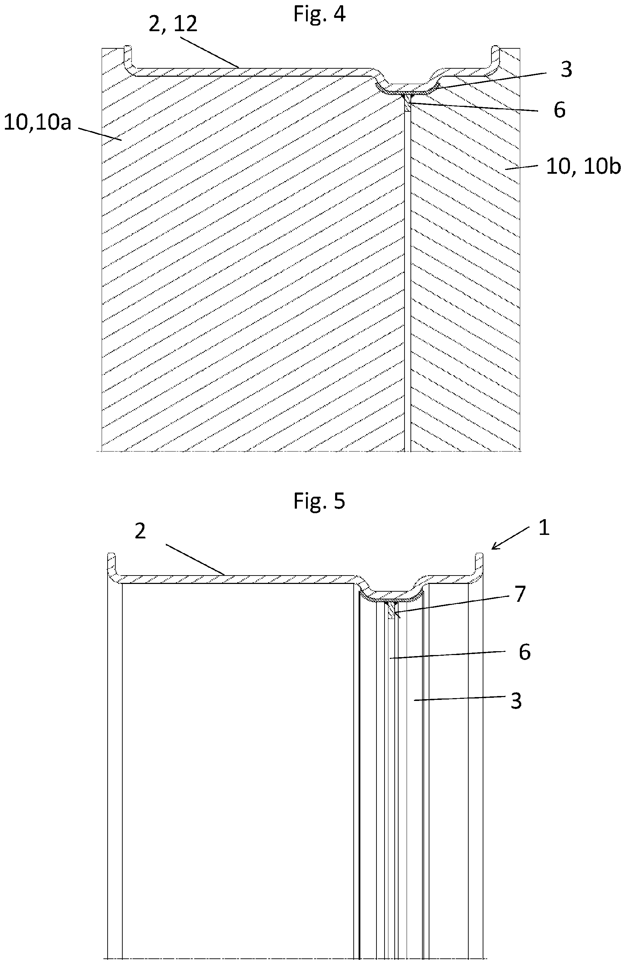

In der folgenden Fertigungsphase nach Fig. 4 wird die Preform des Felgenbetts 2 hergestellt, bei der - ggf. unter Rotation des Formwerkzeugs 10 - Fasermaterial 12 durch Wickeln oder Flechten auf die Kontur des Formwerkzeuges 10 und des Anschlusselementes 3 abgelegt wird. Herbei ergibt sich eine Hinterschneidung des Fasermaterials 12 im Bereich des Tiefbetts, wodurch das Anschlusselement 3 das gebildete Tiefbett umschließt und somit formschlüssig mit der Preform des Felgenbetts 2 verbunden ist. Fig. 4 zeigt die beschriebene Position des Anschlusselements 3 in Zuordnung zum Felgenbett 2. In diesem Zwischenstadium der Herstellung ist die Radfelge 1 komplettiert, stabil geformt und entformbar.

Das von dem Formwerkzeug 10 entformte Zwischenprodukt der Radfelge 1 wird zur Fertigstellung der Radfelge 1 mit Matrixmaterial imprägniert und durch Erwärmung, z.B. in einem Wärmeofen, ausgehärtet (nicht dargestellt).

Fig. 5 zeigt die fertiggestellte Radfelge 1 nach Fig. 1, die das form- und stoffschlüssig mit dem Felgenbett 2 aus CFK verbundene, ringförmige Anschlusselement 3 aufweist. Das Anschlusselement 3 ist mit dem Felgenbett 2 derart verbunden, dass es das Tiefbett des Felgenbetts 2 umschließt und von der inneren Kontur des Felgenbetts 2 abgesetzt ist. Für den nachfolgenden Anschluss der Radscheibe 4 an die Radfelge 1 ist der in den Felgenhohlraum erstreckte Flanschring 6 mit der axial weisenden Anschlussfläche 7 zur Verfügung gestellt.

Durch die prozessintegrierte, form- und stoffschlüssige Anbindung des Anschlusselements 3 an das Felgenbett 2 wird eine besonders feste und zuverlässige Verbindung mit dem Felgenbett 2 erzielt und für den nachfolgenden Anschluss der Radscheibe 4 und für die fertiggestellte Radkonstruktion vorgehalten. Die durch das Verfahren geschaffene Ausführung der Radfelge 1 ermöglicht einen gegenüber dem Felgenbett 2 kontaktfreien Anschluss und zudem eine gegenüber dem Felgenbett 2 berührungslose Anordnung der Radscheibe 4.

Das gleiche Formwerkzeug 10 kann auch für die Integration ähnlich ausgebildeter Anschlusselemente verwendet werden, die z.B. einen alternativen Flanschring (nicht dargestellt) oder keinen Flanschring aufweisen.

Das Formwerkzeug 10 ist in jedem Fall unabhängig von der Geometrie und Befestigung der anzuschießenden Radscheibe 4 ausgebildet.

Das in den Fertigungsprozess integrierte Anschlusselement 3 hat gegenüber der anzuschließenden Radscheibe 4 eine deutlich geringere Masse und Steifigkeit. Das führt dazu, dass das Anschlusselement 3 bei der während der hochtemperierten Wärmebehandlung nach Fig.4 auftretenden unterschiedlichen Dehnung des Felgenbetts 2 und des Anschlusselements 3 und der anschließenden Abkühlphase auftretenden unterschiedlichen Schrumpfung geringere Kräfte auf das Felgenbett 2 ausübt, als es bei einem prozessintegrierten Fügen mit einer kompakten Radscheibe der Fall ist. Das Anschlusselement 3 setzt aufgrund seiner geringeren Steifigkeit dem Felgenbett 2 während des Dehnungs- und Schrumpfungsprozesses weniger Widerstand entgegen, was zu geringeren Spannungen im Felgenbett 2 führt, als es bei einer in den Fertigungsprozess integrierten Radscheibe der Fall ist.

Zudem besteht das Anschlusselement 3 nach diesem Ausführungsbeispiel aus Edelstahl mit einer besonderen Stahllegierung, nämlich aus Pernifer®. Dieses Material hat einen fast identischen Ausdehnungskoeffizient wie das CFK des Felgenbetts 2. Dadurch erfolgen die Aufweitung des Felgenbetts 2 und des Anschlusselements 3 während der Wärmebehandlung und die Schrumpfung beider Bauteile während der anschießenden Abkühlung im gleiche Verhältnis und somit spannungsfrei.

Eigenspannungen im Felgenbett 2 oder Passungenauigkeiten zwischen dem Felgenbett 2 und dem Anschlusselement 3 durch das gemeinsame Fügen treten weitestgehend nicht auf.

Die ringförmige Gestaltung des Anschlusselements 3 verbessert zusätzlich die Spannungsverteilung in der erzeugten Verbindung zwischen Felgenbett 2 und Anschlusselement 3.

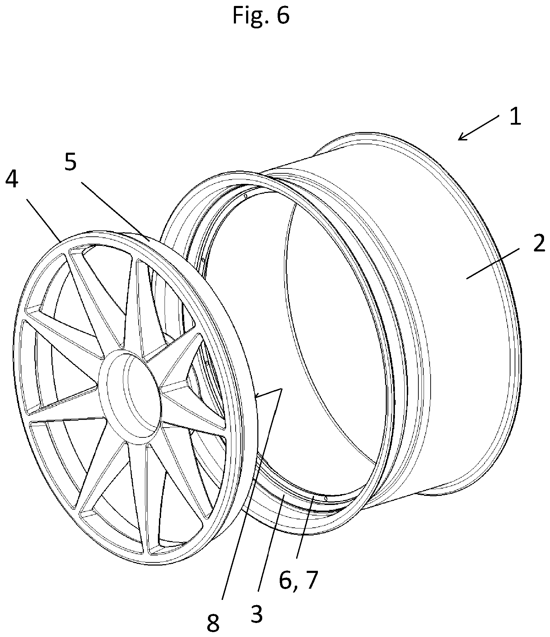

Fig. 6 zeigt in einer isometrischen Darstellung die fertiggestellte Radfelge 1 mit dem Anschlusselement nach Fig. 1, an welche die Radscheibe 4 durch Anlegen der Stirnfläche 8 des Speichenringes 5 an die Anschlussfläche 7 des Flanschrings 6 und anschließender Verschraubung mit dem Anschlusselement 3 befestigt wird.

Bei der Befestigung der Radscheibe 4 an das Anschlusselement 3 kontaktiert lediglich die Stirnfläche 8 des Speichenrings 5 die Anschlussfläche 7 des Anschlusselements 3. Der Flanschring 6 mit der Anschlussfläche 7 ist radial nach innen in den Felgenhohlraum der Radfelge 1 erstreckt angeordnet und erleichtert so zusätzlich die Montage der Radscheibe 4 (vgl. auch Fig. 1).

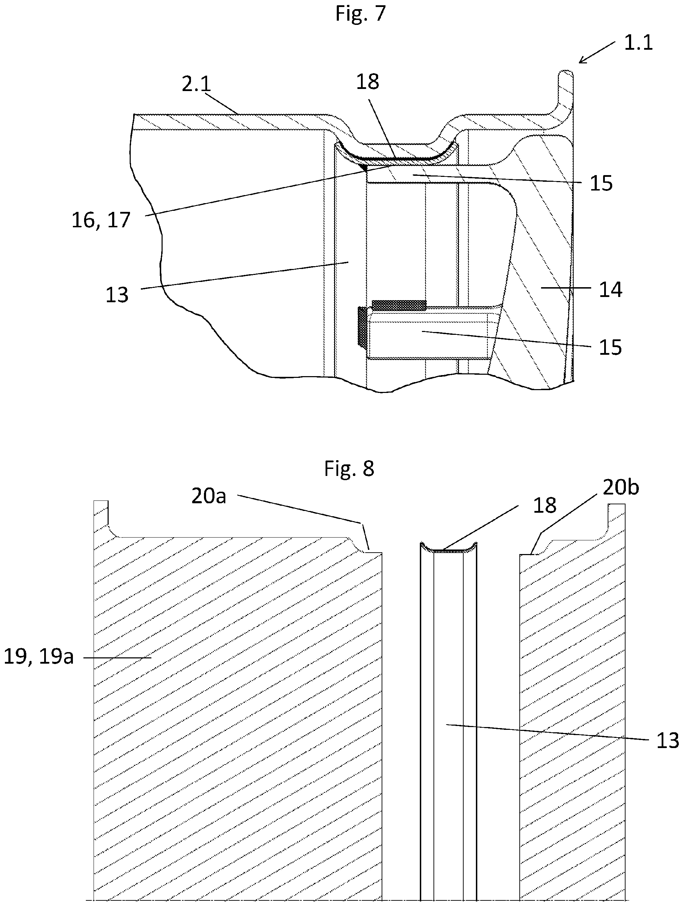

In der teilweisen Schnittdarstellung nach Fig. 7 ist eine nach dem erfindungsgemäßen Verfahren fertiggestellte Radfelge 1.1 nach einem zweiten Ausführungsbeispiel gezeigt. Die Radfelge 1.1 weist ein Felgenbett 2.1 aus CFK und ein ringförmiges Anschlusselement 13 aus Pernifer® gemäß Fig. 1, jedoch ohne Flanschring, auf. Analog dem erfindungsgemäßen Verfahren nach dem vorbeschriebenen Ausführungsbeispiel wird das Anschlusselement 13 ebenfalls während der Fertigung des Felgenbetts 2.1 mit diesem verbunden.

Nachfolgend sollen lediglich die Unterschiede zum Verfahren nach dem vorbeschriebenen Ausführungsbeispiel gemäß den Fig. 1 bis 6 erläutert werden.

An dem ringförmigen Anschlusselement 13 der Radfelge 1.1 nach Fig. 7 ist eine sternförmige Radscheibe 14 mit Speichenenden 15 aus Aluminium angeschlossen. Die äußeren Flanken 16 der Speichen 15 sind an einer radial nach innen in den Felgenhohlraum weisenden, umlaufenden Anschlussfläche 17 des Anschlusselementes 13 angelegt, wobei jedes Speichenende 15 durch dreiseitig ausgebildete Schweißnähte an der Anschlussfläche 17 befestigt ist.

Im weiteren Unterschied zum vorbeschriebenen Ausführungsbeispiel ist das Anschlusselement 13 bündig in das Tiefbett des Felgenbetts 2.1 integriert, so dass es absatzfrei an der inneren Kontur des Felgenbetts 2.1 anschließt. Die im Bereich des Tiefbetts ausgebildete Anschlussfläche 17 ist durch ihre Lage von der übrigen inneren Kontur des Felgenbetts 2.1 nach innen abgesetzt angeordnet.

Zwischen dem Felgenbett 2.1 und der dem Felgenbett 2.1 zugewandten Oberfläche des Anschlusselements 13 ist eine Zwischenschicht 18 aus Keramik vorgesehen, die als Beschichtung der dem Felgenbett 2.1 zugewandten Oberfläche des Anschlusselements 13 ausgebildet ist.

Fig. 8 zeigt die Teilwerkzeuge 19a, 19b des Formwerkzeuges 19 und das mit der Zwischenschicht 18 aus Keramik beschichtete ringförmige Anschlusselement 13. Die Teilwerkzeuge 19a, 19b bilden jeweils einen Teil der Kontur des Felgenbetts 2.1 ab und weisen eine passende Ausnehmung 20a, 20b nach der Kontur des vorgefertigten, ringförmigen Anschlusselements 13 in der Weise auf, dass die dem Felgenbett 2.1 abgewandte Oberfläche des Anschlusselements 13 absatzfrei an die zu bildende innere Kontur des Felgenbetts 2.1 anschließt.

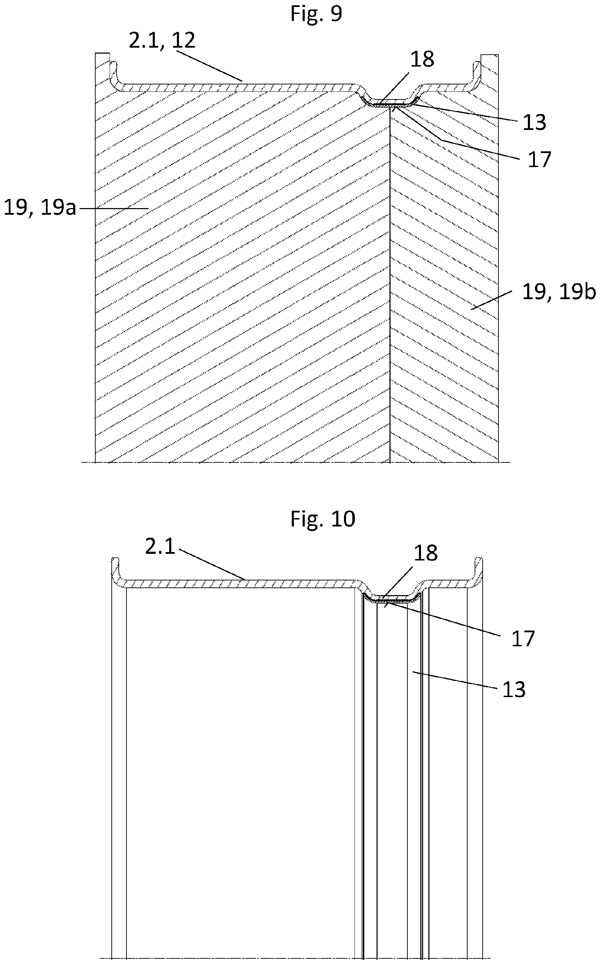

In der dargestellten Fertigungsphase nach Fig. 9 sind die Teilwerkzeuge 19a, 19b des Formwerkzeuges 19 zur Fertigung der Preform des Felgenbetts 2.1 unter Zwischenlegen des beschichteten ringförmigen Anschlusselements 13 zusammengefügt. Fig. 9 zeigt die beschriebene Position des Anschlusselements 13 in Zuordnung zum Formwerkzeug 19 und zum Felgenbett 2.1.

Das Anschlusselement 13 ist im Bereich des auszubildenden Tiefbetts des Felgenbetts 2.1 angeordnet, wobei das Anschlusselement 13 mit der radial nach innen weisenden Anschlussfläche 17 zugleich die innere Kontur des Tiefbetts bildet und begrenzt. Auf der Kontur des Formwerkzeuges 19 und des Anschlusselements 13 mit der Zwischenschicht 18 wird das Fasermaterial 12 unter Bildung formschlüssiger Hinterscheidungen abgelegt. Das ringförmige Anschlusselement 13 mit der Zwischenschicht 18 umschließt und begrenzt einerseits das gebildete Tiefbett und ist andererseits in seinem umlaufenden Randbereich vom Fasermaterial 12 eingeschlossen.

Fig. 10 zeigt die vom Formwerkzeug 19 entformte Preform des Felgenbetts 2.1 mit dem integrierten, beschichteten Anschlusselement 13. Zur Fertigstellung der Radfelge 1.1 nach Fig. 7 wird die Preform mit Matrixmaterial imprägniert und ausgehärtet. Dabei wird das beschichtete Anschlusselement 13 fest mit dem Felgenbett 2.1 verklebt.

Mit dem Verfahren nach dem zweiten Ausführungsbeispiel treten die bereits zum vorstehenden Ausführungsbeispiel erläuterten Vorteile desgleichen ein.

Die flächige, radial nach innen weisende Anschlussfläche 17 ermöglicht einen universellen Anschluss verschiedenartiger Radscheiben mit verschiedenen Fügetechniken, wie Löten, Schweißen, Kleben oder Einpressen.

Zusätzlich kommt beim Anschluss der sternförmigen Radscheibe 14 nach diesem Ausführungsbeispiel ein besonderer Vorteil der Zwischenschicht 18 zum Tragen. Die Zwischenschicht 18 aus Keramik hat einen deutlich höheren Wärmeleitwiderstand als das Anschlusselementes 13 aus Edelstahl. Der durch das vorgesehene Anschweißen der Speichenenden 15 auf das Anschlusselement 13 ausgeübte Wärmeeintrag wirkt sich infolge der Zwischenschicht 18 kaum auf das Felgenbett 2.1 aus und vermindert so nachträglich erzeugte Spannungen im Felgenbett 2.1 (vgl. Fig. 7).

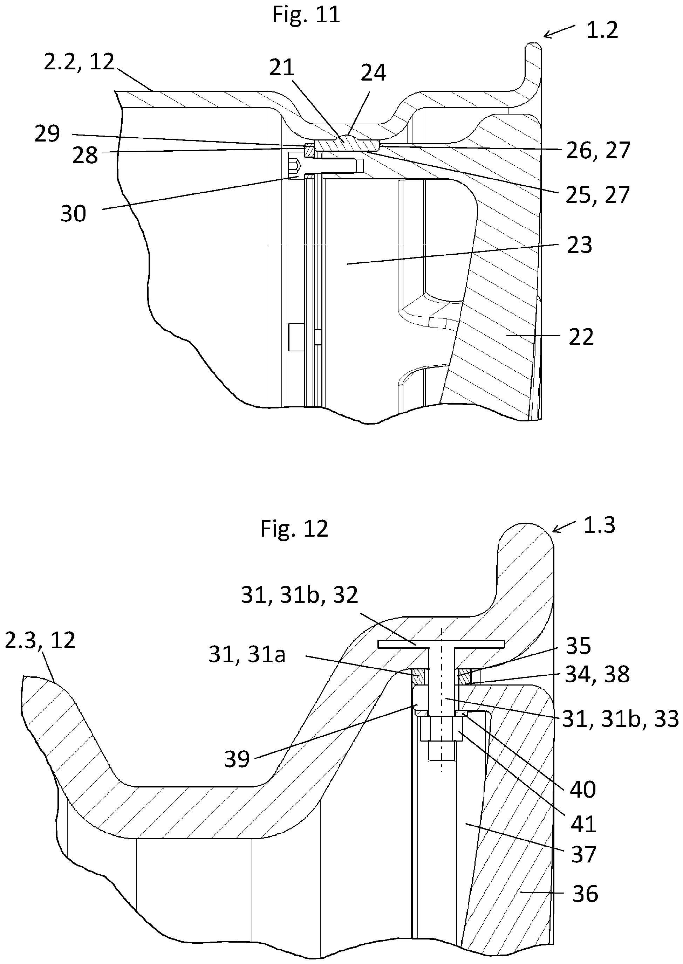

In einem dritten Ausführungsbeispiel nach Fig. 11 ist eine weitere nach dem erfindungsgemäßen Verfahren fertiggestellte Radfelge 1.2 gezeigt. Die Radfelge 1.2 weist ein Felgenbett 2.2 aus CFK und ein ringförmiges Anschlusselement 21 aus glasfaserverstärktem Kunststoff(GFK) auf, das während der Fertigung des Felgenbetts 2.2 mit diesem verbunden wird.

Nachfolgend sollen lediglich die Unterschiede zum Verfahren nach dem ersten Ausführungsbeispiel gemäß den Fig. 1 bis 6 beschrieben werden.

An dem ringförmigen Anschlusselement 21 der Radfelge 1.2 nach Fig. 11 ist eine tellerförmige Radscheibe 22 mit durchbrochenen Speichenfeld und Speichenring 23 aus Aluminium angeschlossen.

Im weiteren Unterschied zum Ausführungsbeispiel nach Fig. 1 bis 6 weist das ringförmige Anschlusselement 21 aus GFK einen im Wesentlichen rechteckigen Ringquerschnitt mit einer umlaufenden Wölbung 24 auf, wobei das Anschlusselement 21 im Bereich des Tiefbetts so an das Felgenbett 2.2 angeordnet ist, dass der Ringquerschnitt des Anschlusselements 21 radial nach innen in den Felgenhohlraum erstreckt ist und die innere Kontur des Felgenbetts 2.2 und insbesondere des Tiefbetts deutlich überragt. An dem Anschlusselement 21 ist eine umlaufende, radial nach innen weisende Anschlussfläche 25 und eine umlaufende, im Wesentlichen radial erstreckte, axial weisende Anschlussfläche 26 bildet.

Somit kann die Radscheibe 22 mittels einer Klemmverbindung mit der Radfelge 1.2, respektive mit dem ringförmigen Anschlusselement 21 verbunden werden. Eine zur Kontur der Anschlussflächen 25, 26 korrespondierende, umlaufende Aussparung 27 des Speichenrings 23 der Radscheibe 22 wird an die jeweils umlaufende, radial nach innen weisende Anschlussfläche 25 und an die axial weisenden Anschlussfläche 26 des Anschlusselements 21 angelegt. Ein Klemmring 28 aus Aluminium ist an der gegensinnig axial weisenden Anschlagfläche 29 des Anschlusselements 21 angeordnet und mit mehreren, über den Umfang der Radfelge 1.2 verteilt angeordneten Befestigungsschrauben 30 mit dem Speichenring 23 gegen das Anschlusselement 21 verspannt. Das Anschlusselement 21 aus GFK weist eine im Verhältnis zu seinem Gewicht sehr hohe Festigkeit auf, die für die Klemmverbindung hervorragend geeignet ist.

Zur Fertigung des Felgenbetts 2.2 wird das Anschlusselement 21 in eine entsprechende Ausnehmung eines zweiteiligen Formwerkzeuges eingelegt (nicht dargestellt). Die im Anschlusselement 21 ausgebildete Wölbung 24 schafft bei der Ablage des Fasermaterials 12 auf der Kontur des Formwerkzeuges und des Anschlusselementes 21 eine Hinterschneidung, die die umlaufende Wölbung 24 des Anschlusselements 21 umschließt und das Anschlusselement 21 zunächst formschlüssig mit der Preform des Felgenbetts 2.2 verbindet. Im Fortgang des Verfahrens wird an den Kontaktflächen des Felgenbetts 2.2 und des Anschlusselements 21 der CFK des Felgenbetts 2.2 mit dem GFK des Anschlusselements 21 verbunden (nicht dargestellt), wobei aufgrund der guten Klebeeigenschaften des GFK eine besonders feste Klebung erzielt wird.

Zusätzlich sorgt die hohe Festigkeit und geringe Steifigkeit des Anschlusselementes 21 aus GFK für eine Minderung der Spannung bei der gemeinsamen Wärmebehandlung im Fertigungsprozess des Felgenbetts 2.2.

Durch diese Ausführung des erfindungsgemäßen Verfahrens wird ebenfalls eine prozessintegrierte, form- und stoffschlüssige Anbindung des Anschlusselements 21 an das Felgenbett 2.2 mit einer besonders festen und zuverlässigen Verbindung erzielt und für den nachfolgenden Klemmanschluss der Radscheibe 22 eine solide, sichere Anschlussmöglichkeit vorgehalten.

Der hohe Wärmeleitwiderstand des Anschlusselements 21 aus GFK gegenüber der Radscheibe 22 aus Aluminium reduziert zudem die Wärmeinwirkung der angeschlossenen Radscheibe 22 auf das Felgenbett im Betrieb des Rades.

In Fig. 12 ist auszugsweise eine erfindungsgemäß hergestellte Radfelge 1.3 nach einem vierten Ausführungsbeispiel dargestellt. Die Radfelge 1.3 weist ein Felgenbett 2.3 aus CFK und ein mehrteiliges Anschlusselement 31 auf, das während der Fertigung des Felgenbetts 2.3 mit diesem verbunden wird.

Nachfolgend soll lediglich auf die Unterschiede zum Verfahren nach dem Ausführungsbeispiel gemäß der Fig. 11 eingegangen werden.

Das mehrteilige Anschlusselement 31 besteht aus einem umlaufend ausgebildeten Ringteil 31a aus GFK und beispielsweise zehn einzelnen, um den Umfang der Radfelge 1.3 verteilt angeordneten Stiftteilen 31b aus Pernifer®. Die Stiftteile 31b weisen jeweils einen tellerförmigen Kopf 32 und einen Schaft 33 mit einem, am Schaftende ausgebildeten Gewinde auf. Die Stiftteile 31b sind derart dem Felgenbett 2.3 zugeordnet, dass sich die Köpfe 32 der Stiftteile 31b in tangentialer Ausrichtung im Felgenbett 2.3 erstrecken, während die Schäfte 33 radial in den Felgenhohlraum gerichtet und erstreckt sind.

Ähnlich dem ringförmigen Anschlusselement 21 nach Fig. 11 weist das Ringteil 31a aus GFK einen im Wesentlichen rechteckigen Ringquerschnitt auf und ist radial nach innen in den Felgenhohlraum erstreckt am Felgenbett 2.3 angeordnet. An dem Ringteil 31a ist eine umlaufende, radial nach innen weisende Anschlussfläche 34 ausgebildet.

Im Unterschied zum ringförmigen Anschlusselement 21 nach Fig. 11 weist das Ringteil 31a Öffnungen 35 entsprechend der Anzahl der Stiftteile 31b auf, die von den radial nach innen gerichteten Schäften 33 der Stiftteile 31b durchdrungen werden, so dass diese über den Innendurchmesser des Ringteiles 31a überstehen.

Im weiteren Unterschied zum Ausführungsbeispiel nach Fig. 11 ist das mehrteilige Anschlusselement 31 im Bereich des Reifensitzes mit dem Felgenbett 2.3 verbunden.

An dem Ringteil 31a und den Schäften 33 der Stiftteile 31b des mehrteiligen Anschlusselements 31 kann eine besonders große Radscheibe, im vorliegenden Ausführungsbeispiel eine große tellerförmige Radscheibe 36 mit durchbrochenen Speichenfeld und Speichenring 37 aus Aluminium angeschlossen werden.

An der radial nach innen weisenden Anschlussfläche 34 wird eine umfangsflächig korrespondierende äußere Mantelfläche 38 des Speichenrings 37 der Radscheibe 36 angelegt.

Der Speichenring 37 weist zehn, zur Anzahl und Anordnung der Schäfte 33 der Stifteile 31b korrespondierende Schlitze 39 auf, wobei bei der Montage der Radscheibe 36 in jedem Schlitz 39 je ein Schaft 33 der Stifteile 31b aufgenommen wird. Die Größe des Schlitzes 39 realisiert eine beabstandete Positionierung des Schaftes 33 des Stiftteils 31b gegenüber dem Speichenring 37 der Radscheibe 36.

Die Schaftenden der Schäfte 33 werden jeweils mit einer Unterlegscheibe 40 und einer Mutter 41 bestückt und die Schraubverbindung zwischen der Radscheibe 36, dem Ringteil 31a und den Stiftteilen 31b verspannt.

Das Ringteil 31a und die Stiftteile 31b werden unmittelbar bei der Vorfertigung der Preform des Felgenbetts 2.3 mit dem Felgenbett 2.3 form- und stoffschlüssig zusammengefügt.

Zur Fertigung der Preform des Felgenbetts 2.3 wird das Ringteil 31a aus GFK in eine entsprechende Ausnehmung eines zweiteiligen Formwerkzeuges des Felgenbetts 2.3 (nicht dargestellt) eingelegt, wobei das Ringteil 31a im Bereich des auszubildenden Reifensitzes des Felgenbetts 2.3 positioniert ist und die dem Felgenbett 2.3 zugewandte Oberfläche des Ringteils 31a bündig an der auszubildenden innere Kontur des Felgenbetts 2.3 anschließt.

Auf der umlaufenden Kontur des geschlossenen mit dem Ringteil 31a bestückten Formwerkzeuges wird in analoger Weise zum vorhergehenden Ausführungsbeispiel Fasermaterial 12 abgelegt und zunächst eine erste Faserschicht des Fasermaterial 12 gebildet.

Danach werden die Stifteile 31b in die erste Faserschicht eingesteckt, so dass deren Köpfe 32 auf der ersten Faserschicht aufliegen und deren Schäfte 33 durch die vorhandenen Öffnungen 35 des Ringteils 31a ragen. Die Ausnehmung für das Ringteil 31a im Formwerkzeug ist mit Vertiefungen entsprechend der Anzahl, Anordnung und Gestaltung der Schäfte 33 ausgebildet, so dass die Schaftenden der eingesteckten Stiftteile 31b in die Vertiefung aufgenommen werden (nicht dargestellt).

Auf die erste Faserschicht und die Köpfe 32 der Stifteile 31b wird eine zweite Faserschicht des Fasermaterials 12 abgelegt (nicht dargestellt), bis die gewünschte Dicke des Felgenbetts 2.3 erreicht ist. Hierbei werden die Stiftteile 31b überdeckt und vom Fasermaterial 12 eingeschlossen. Durch die große Oberfläche der Köpfe 32 wird ein ausgeprägter Formschluss der Stiftteile 31b mit der Preform des Felgenbetts 2.3 erzielt.

Im Fortgang des Verfahrens wird das Fasermaterial 12 der Preform mit Matrixmaterial infiltriert und der Verbund aus der Preform, dem Ringteil 31a und den Stiftteilen 31b ausgehärtet, wobei das Ringteil 31a aus GFK und die Stiftteile 31b aus Pernifer® mit dem Felgenbett 2.3 aus CFK verklebt werden.

Durch das annähernd gleiche Dehnungs- und Schrumpfungsverhalten des Felgenbetts 2.3 aus CFK und der integrierten Stiftteile 31b aus Pernifer® während der gemeinsamen Wärmebehandlung werden verfahrensbedingte Spannungen im Felgenbett 2.3 vermieden.

Die gezielt ausgebildeten Kontaktflächen zwischen dem Ringteil 31a und dem Felgenbett 2.3 sowie zwischen den Stiftteilen 31b und dem Felgenbett 2.3 sorgen für eine besonders materialsparende und zugleich feste, form- und stoffschlüssige Verbindung des mehrteiligen Anschlusselements 31 mit dem Felgenbett 2.3. Unterstützend erbringen die sehr guten Klebeeigenschaften des GFK eine besonders feste Verklebung des Ringteils 31a mit dem Felgenbett 2.3.

Zusätzlich mindert die geringe Steifigkeit des Ringteils 31a aus GFK die während der gemeinsamen Wärmebehandlung infolge der Dehnungs- und Schrumpfungsunterschiede gegenüber dem Felgenbett 2.3 auftretenden Spannungen.

Durch diese Ausführung des erfindungsgemäßen Verfahrens wird eine besonders effiziente Verbindung des mehrteiligen Anschlusselements 31 mit dem Felgenbett 2.3 als Vorgabe für eine solide Schraubverbindung der Radscheibe an die Radfelge 1.3 bereitgestellt.

Die radial gerichtete Anordnung der Anschlussflächen 34, 38 ermöglicht eine besonders gleichmäßige Druckverteilung der durch die Verschraubung erzeugten Verspannung zwischen der Radscheibe 36 und der Radfelge 1.3.

Die Krafteinleitung der Verschraubung in die Radfelge 1.3 erfolgt direkt in die, im Felgenbett 2.3 integrierten Stiftteile 31b, wodurch das Ringteil 31a weniger beansprucht ist und entsprechend massenminimiert gestaltet sein kann.

Der hohe Wärmeleitwiderstand des Ringteils 31a aus GFK gegenüber der Radscheibe 36 aus Aluminium reduziert die Wärmeinwirkung der angeschlossenen Radscheibe 36 auf das Felgenbett 2.3 im Betrieb des Rades.

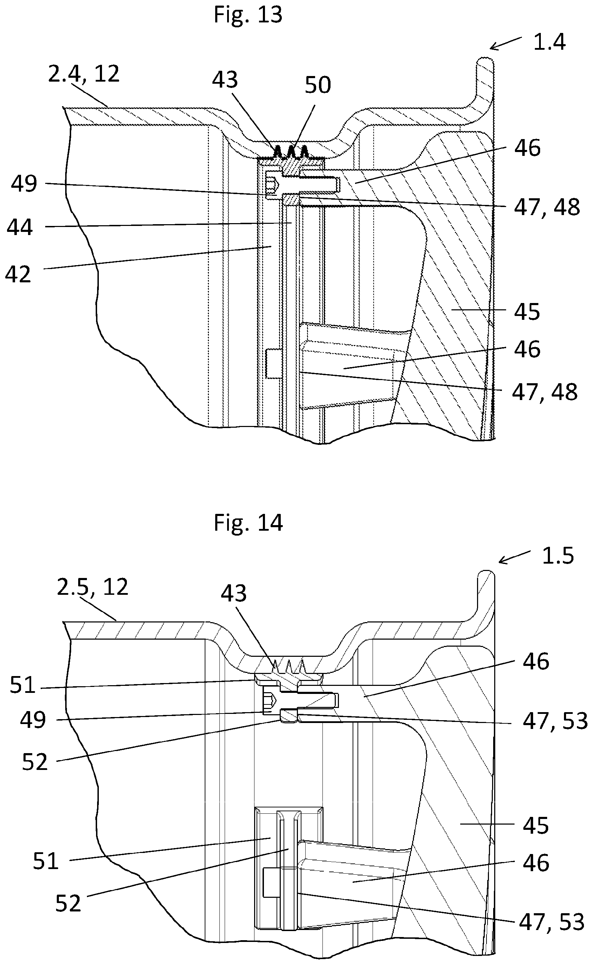

In Fig. 13 ist auszugsweise eine erfindungsgemäß hergestellte Radfelge 1.4 nach einem fünften Ausführungsbeispiel dargestellt. Die Radfelge 1.4 weist ein Felgenbett 2.4 aus CFK auf, das mit einem ringförmigen Anschlusselement 42 aus Stahl mit radial nach außen in das Felgenbett 2.4 erstreckten Pinelementen 43 verbunden ist.

Nachfolgend soll lediglich auf die Unterschiede zum Verfahren nach dem Ausführungsbeispiel gemäß der Fig. 11 eingegangen werden.

An einem radial nach innen in den Felgenhohlraum erstreckten Flanschring 44 des ringförmigen Anschlusselements 42 der Radfelge 1.4 nach Fig. 13 ist eine sternförmige Radscheibe 45 mit Speichenenden 46 aus Aluminium angeschlossen. Die Stirnflächen 47 der Speichenenden 46 liegen an der radial erstreckten, axial weisenden Anschlussfläche 48 des Flanschrings 44 an; mittels Befestigungsschrauben 49 werden die Speichenenden 46 mit dem Anschlusselement 42 verbunden.

Zur Fertigung des Felgenbetts 2.4 und zum gleichzeitigen Anfügen des Anschlusselements 42 wird das ringförmige Anschlusselement 42 in entsprechende Ausnehmungen eines zweiteiligen Formwerkzeuges eingelegt (nicht dargestellt). Die radial abspreizend ausgebildeten Pinelemente 43 des Anschlusselements 42 ragen dabei markant in die zu bildende Faserschicht 12 der Preform hinein und werden bei der Faserablage des Fasermaterials 12 auf der Kontur des Formwerkzeuges und des Anschlusselementes 42 allseitig umschlossen. Durch die große Oberfläche der Pinelemente 43 wird ein sehr ausgeprägter Formschluss des Anschlusselements 42 mit der Preform des Felgenbetts 2.4 erzielt.

Die Pinelemente 43 sind mit einer Zwischenschicht 50 aus Teflon beschichtet. Dadurch können die abzulegenden Fasern 12 leichter in die Zwischenräume zwischen die Pinelemente 43 hinein gleiten, so dass die Faserablage in diesem Bereich zuverlässig und dicht erfolgt.

Im Fortgang des Verfahrens wird die Preform des Felgenbetts 2.4 wie vorbeschrieben infiltriert und ausgehärtet, wobei die Teflonschicht 50 eine Entkopplung der Klebung gegenüber den Pinelementen 43 erzeugt. Der Kraftfluss erfolgt bei dieser Verbindung über den ausgeprägten Formschluss des Felgenbetts 2.4 mit den Pinelementen 43 als einzig tragende Elemente.

Durch diese Ausführung des erfindungsgemäßen Verfahrens wird eine prozessintegrierte, formschlüssige Anbindung des Anschlusselements 42 an das Felgenbett 2.4 mit einer besonders festen und zuverlässigen Verbindung erzielt und für den nachfolgenden Anschluss der Radscheibe 45 vorgehalten.

In einer alternativen Ausführung zur Radfelge 1.4 nach Fig. 13 wird in Fig. 14 eine Radfelge 1.5 mit mehreren Anschlusselementen 51 gezeigt, die wie das ringförmige Anschlusselement 42 nach Fig. 13, radial nach außen erstreckten Pinelemente 43 aufweisen und während der Fertigung des Felgenbetts 2.5 mit diesem verbunden werden.

Im Unterschied zur vorbeschriebenen Ausführungsbeispiel sind die Anschlusselemente 51 ringsegmentförmig ausgebildet und im Umfang der Radfelge 1.5 verteilt angeordnet. An den Anschlusselementen 51 ist die sternförmige Radscheibe 45 mit Speichenenden 46 aus Aluminium gemäß dem Ausführungsbeispiel nach Fig. 12 anzuschließen, wobei die Anschlusselemente 51 in der entsprechenden Anzahl und Anordnung der Speichen 46 der anzuschließenden Radscheibe 45 vorgesehen sind.

Die Anschlusselemente 51 weisen radial nach innen in den Felgenhohlraum erstreckte Flanschstege 52 auf, an denen die Speichenenden 46 der sternförmige Radscheibe 45 angeschlossen werden. Die Speichenenden 46 werden mit ihren Stirnflächen 47 jeweils an einer seitlichen, axial weisenden Anschlussfläche 53 der Flanschstege 52 angelegt und mittels der Befestigungsschrauben 49 mit den Anschlusselementen 51 und damit mit der Radfelge 1.5 verbunden.

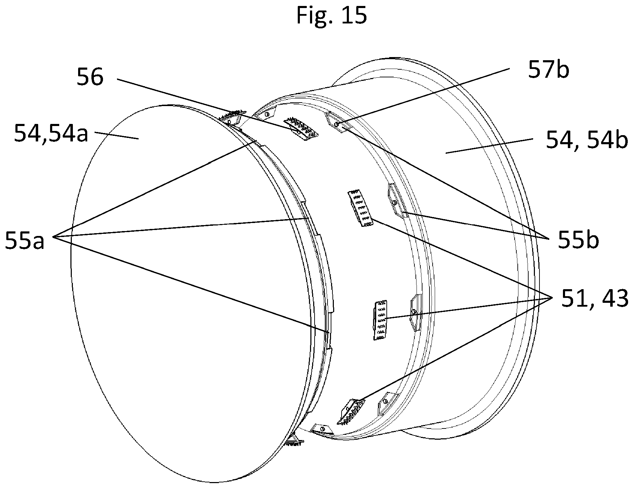

Fig. 15 zeigt in einer isometrischen Darstellung die Teilwerkzeuge 54a, 54b des Formwerkzeugs 54 zur Fertigung der Preform des Felgenbetts 2.5 und die einzelnen ringsegmentförmigen Anschlusselemente 51 unmittelbar vor der Beiordnung in die passenden Ausnehmungen 55a, 55b der Teilwerkzeuge 54a, 54b. Im geschlossenen Zustand der Teilwerkzeuge 54a, 54b (nicht dargestellt) sind die Anschlusselemente 51 dicht eingeschlossen, wobei die dem Felgenbett 2.5 zugewandte Oberfläche der Anschlusselemente 51 mit den Pinelementen 43 der Kontur des Felgenbetts 2.5 zugeordnet ist.

Die Anschlusselemente 51 weisen jeweils eine vor dem Fügeprozess eingebrachte Bohrung 56 für die Schraubbefestigung der Radscheibe 45 auf. Dementsprechend sind in den Ausnehmungen 55a, 55b der Teilwerkzeuge 54a, 54b zusätzlich entsprechende Formzapfen 57a, 57b zur Belegung der Bohrungen 56 und zur Lagesicherung der Anschlusselemente 51 vorgesehen.

Diese Ausführung des erfindungsgemäßen Verfahrens ermöglicht mehrere einzelne Anschlusselemente 51 in das Felgenbett 2.5 zu integrieren und zuverlässig fest mit diesem zu verbinden. Hiermit werden unter der Gewährleistung der Festigkeit masseminimierte und optisch besonders unauffällige Verbindungen für den Anschluss von insbesondere sternförmigen Radscheiben 45 vorgehalten.

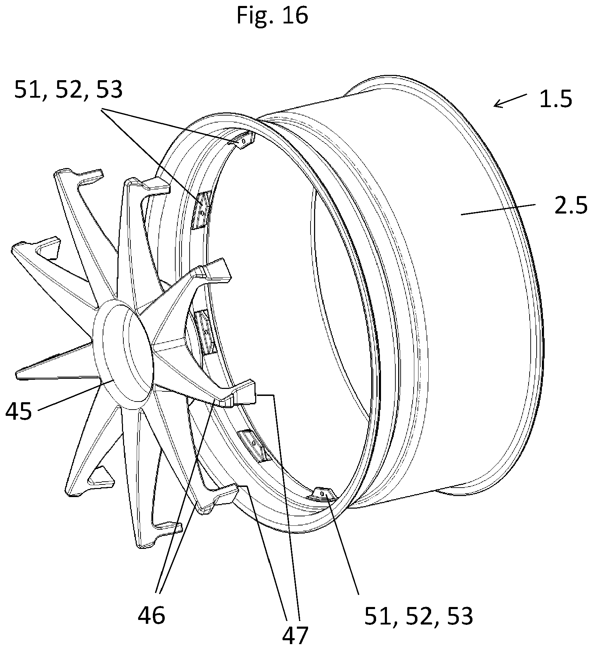

Fig. 16 zeigt in einer isometrischen Darstellung die fertiggestellte Radfelge 1.5 mit den ringsegmentförmigen Anschlusselementen 51 nach Fig. 14, an welchen die sternförmige Radscheibe 45 durch Anlegen der Stirnflächen 47 der Speichenenden 46 an die seitlichen, axial weisenden Anschlussflächen 53 der Flanschstege 52 und anschließender Verschraubung mit den ringsegmentförmigen Anschlusselementen 51 befestigt wird.

### Bezugszeichenliste

- 1: Radfelge 1.1, 1.2, 1.3, 1.4 1.5
- 2: Felgenbett 2.1, 2.2, 2.3, 2.4 2.5
- 3: ringförmigen Anschlusselement
- 4: tellerförmige Radscheibe mit Speichenring
- 5: Speichenring
- 6: radial erstreckter Flanschring
- 7: axial weisende Anschlussfläche des Anschlusselements
- 8: Stirnfläche des Speichenrings
- 9: Befestigungsschrauben
- 10: Formwerkzeug, Teilwerkzeug a, b
- 11: Ausnehmung a, b
- 12: Fasermaterial
- 13: ringförmiges Anschlusselement
- 14: sternförmige Radscheibe mit Speichenenden
- 15: Speiche, Speichenende
- 16: Flanke der Speiche
- 17: radial nach innen weisende Anschlussfläche
- 18: Zwischenschicht
- 19: Formwerkzeug, Teilwerkzeug a, b
- 20: Ausnehmung
- 21: ringförmiges Anschlusselement
- 22: tellerförmige Radscheibe mit Speichenring
- 23: Speichenring
- 24: Wölbung des Anschlusselements
- 25: radial nach innen weisende Anschlussfläche
- 26: axial weisende Anschlussfläche
- 27: Aussparung des Speichenrings
- 28: Klemmring
- 29: axial weisenden Anschlagfläche
- 30: Befestigungsschraube
- 31: mehrteiliges Anschlusselement, Ringteil a, Stiftteil b
- 32: Kopf des Stiftteils
- 33: Schaft des Stiftteils
- 34: radial nach innen weisende Anschlussfläche
- 35: Öffnung
- 36: tellerförmige Radscheibe mit Speichenring
- 37: Speichenring
- 38: äußere Mantelfläche des Speichenrings
- 39: Schlitz
- 40: Unterlegscheibe
- 41: Mutter
- 42: ringförmigen Anschlusselement mit Pinelemente
- 43: Pinelemente
- 44: radial erstreckter Flanschring
- 45: sternförmige Radscheibe mit Speichenenden
- 46: Speichenende
- 47: Stirnfläche des Speichenendes
- 48: umlaufende, axial weisende Anschlussfläche
- 49: Befestigungsschraube
- 50: Zwischenschicht
- 51: ringsegmentförmiges Anschlusselement
- 52: radial erstreckter Flanschsteg
- 53: axial weisenden Anschlussfläche
- 54: Formwerkzeug, Teilwerkzeuge a, b
- 55: Ausnehmung
- 56: Bohrung
- 57: Formzapfen

## Patentansprüche

1. Verfahren zur Herstellung einer Radfelge mit einem Felgenbett aus Faserverbundwerkstoff, **dadurch gekennzeichnet, dass** während der Fertigung des Felgenbetts (2) ein Anschlusselement (3, 13, 21, 31, 42, 51) mit dem Felgenbett (2) verbunden wird, wobei das Anschlusselement(3, 13, 21, 31, 42, 51) derart ausgebildet und angeordnet wird, dass an dem Anschlusselement (3, 13, 21, 31, 42, 51) eine Radscheibe (4, 14, 22, 36, 45) anschließbar ist.

2. Verfahren nach Anspruch 1, **dadurch gekennzeichnet, dass** das Anschlusselement (3, 13, 21, 31, 42, 51) wenigstens eine Anschlussfläche (7, 17, 25, 26, 34, 48, 53) aufweist, die korrespondierend mit einer bzw. jeweils einer Anschlussfläche (8, 16, 27, 38, 47) der Radscheibe (4, 14, 22, 36, 45) ausgebildet und angeordnet wird.

3. Verfahren nach Anspruch 1 oder 2, **dadurch gekennzeichnet, dass** das Anschlusselement (3, 13, 21, 31, 42, 51) während der Vorfertigung einer Preform des Felgenbettes (2) einem Formwerkzeug (10, 19, 54) des Felgenbetts (2) beigeordnet und mit der Preform, vorzugsweise formschlüssig, verbunden wird.

4. Verfahren nach einem der Ansprüche 1 bis 3, **dadurch gekennzeichnet, dass** für das Anschlusselement (3, 13, 31) ein Material verwendet wird, das einen im Verhältnis zum thermischen Ausdehnungskoeffizient des Faserverbundwerkstoffs des Felgenbettes zumindest ähnlichen thermischen Ausdehnungskoeffizient aufweist.

5. Verfahren nach einem der vorhergehenden Ansprüche, **dadurch gekennzeichnet, dass** das Anschlusselement (3, 13, 21, 42, 51) im Bereich des Tiefbetts des Felgenbetts (2) mit dem Felgenbett (2) verbunden wird.

6. Verfahren nach einem der vorhergehenden Ansprüche, **dadurch gekennzeichnet, dass** das Anschlusselement (3, 21, 31, 42, 51) in einen Felgenhohlraum der Radfelge (1) erstreckt ausgebildet und angeordnet wird.

7. Verfahren einem der Ansprüche 3 bis 6, **dadurch gekennzeichnet, dass** das Anschlusselement (3, 13, 21, 31, 42, 51) einer entsprechenden Ausnehmung (11, 20, 55) des Formwerkzeuges (10, 19, 54) beigeordnet wird.

8. Verfahren nach einem der vorhergehenden Ansprüche, **dadurch gekennzeichnet, dass** das Anschlusselement (21, 31) aus glasfaserverstärktem Kunststoff (GFK) gebildet wird.

9. Verfahren nach einem der vorhergehenden Ansprüche, **dadurch gekennzeichnet, dass** im Fügebereich zwischen dem Felgenbett (2) und dem Anschlusselement (13, 42) eine Zwischenschicht (18, 50) ausgebildet wird.

10. Verfahren nach einem der vorhergehenden Ansprüche, **dadurch gekennzeichnet, dass** auf der Anschlussfläche des Anschlusselementes eine Zwischenschicht ausgebildet wird.

11. Verfahren nach Anspruch 9 oder 10, **dadurch gekennzeichnet, dass**, dass die Zwischenschicht (18) aus einem Material gebildet wird, welches einen im Verhältnis zum Wärmeleitwiderstand des Materials des Anschlusselementes (13) größeren Wärmeleitwiderstand aufweist.

12. Verfahren nach einem der vorhergehenden Ansprüche, **dadurch gekennzeichnet, dass** das Anschlusselement (21, 31) aus einem Material gebildet wird, welches einen im Verhältnis zum Wärmeleitwiderstand des Materials der anzuschließenden Radscheibe (22, 36) größeren Wärmeleitwiderstand aufweist.

13. Verfahren nach einem der vorhergehenden Ansprüche, **dadurch gekennzeichnet, dass** während der Fertigung des Felgenbetts (2) ein mehrteiliges Anschlusselement (31) mit dem Felgenbett (2) verbunden wird.

14. Verfahren nach einem der vorhergehenden Ansprüche, **dadurch gekennzeichnet, dass** während der Fertigung des Felgenbetts (2) mehrerer, vorzugsweise umfänglich der Radfelge (1) angeordnete Anschlusselemente (51) mit dem Felgenbett (2) verbunden werden.

## Claims

1. Method for the manufacture a wheel rim with a rim base made of fibre-reinforced composite, **characterised in that** during the manufacture of the rim base (2) a connecting element (3, 13, 21, 31, 42, 51) is joined to the rim base (2), where the connecting element (3, 13, 21, 31, 42, 51) is designed and arranged in such a way that a wheel disc (4, 14, 22, 36, 45) can be connected to the connecting element (3, 13, 21, 31, 42, 51).

2. Method according to claim 1, **characterised in that** the connecting element (3, 13, 21, 31, 42, 51) has at least one connecting surface (7, 17, 25, 26, 34, 48, 53) which or respectively each of which is designed and arranged to correspond with a connecting surface (8, 16, 27, 38, 47) of the wheel disc (4, 14, 22, 36, 45).

3. Method according to claim 1 or 2, **characterised in that** the connecting element (3, 13, 21, 31, 42, 51) during the prefabrication of a preform of the rim base (2) is assigned to a forming tool (10, 19, 54) of the rim base (2) and joined to the preform, preferably form-fittingly.

4. Method according to one of claims 1 to 3, **characterised in that** for the connecting element (3, 13, 31) a material is used which in relation to the coefficient of thermal expansion of the fibre-reinforced composite of the rim base has at least a similar coefficient of thermal expansion.

5. Method according to one of the preceding claims, **characterised in that** the connecting element (3, 13, 21, 42, 51) is joined to the rim base (2)in an area of the drop center of the rim base (2).

6. Method according to one of the preceding claims, **characterised in that** the connecting element (3, 21, 31, 42, 51) is designed and arranged extending into a rim cavity of the wheel rim (1).

7. Method according to one of claims 3 to 6, **characterised in that** the connecting element (3, 13, 21, 31, 42, 51) is assigned to a corresponding recess (11, 20, 55) in the forming tool (10, 19, 54).

8. Method according to one of the preceding claims, **characterised in that** the connecting element (21, 31) is formed of glass-fibre reinforced plastic (GFRP).

9. Method according to one of the preceding claims, **characterised in that** in the joining region between the rim base (2) and the connecting element (13, 42) an intermediate layer (18, 50) is formed.

10. Method according to one of the preceding claims, **characterised in that** an intermediate layer is formed on the connecting surface of the connecting element.

11. Method according to claim 9 or 10, **characterised in that** the intermediate layer (18) is formed of a material which in relation to the thermal resistivity of the material of the connecting element (13) has a greater thermal resistivity.

12. Method according to one of the preceding claims, **characterised in that** the connecting element (21, 31) is formed of a material which in relation to the thermal resistivity of the material of the wheel disc (22, 36) being connected, has a greater thermal resistivity.

13. Method according to one of the preceding claims, **characterised in that** during the manufacture of the rim base (2) a multi-part connecting element (31) is joined to the rim base (2) .

14. Method according to one of the preceding claims, **characterised in that** during the manufacture of the rim base (2) several connecting elements (51), preferably arranged circumferentially on the wheel rim (1), are joined to the rim base (2).

## Revendications

1. Procédé de fabrication d'une jante comprenant une base de jante composée de matériau composite à base de fibres, **caractérisé en ce que** pendant la fabrication de la base de jante (2), un élément de raccordement (3, 13, 21, 31, 42, 51) est relié avec la base de jante (2), sachant que l'élément de raccordement (3, 13, 21, 31, 42, 51) est configuré et disposé de telle sorte que contre l'élément de raccordement (3, 13, 21, 31, 42, 51) puisse être raccordé un disque de roue (4, 14, 22, 36, 45) .

2. Procédé selon la revendication 1, **caractérisé en ce que** l'élément de raccordement (3, 13, 21, 31, 42, 51) présente au moins une surface de raccordement (7, 17, 25, 26, 34, 48, 53) configurée et disposée de sorte à épouser une ou respectivement une surface de raccordement (8, 16, 27, 38, 47) du disque de roue (4, 14, 22, 36, 45).

3. Procédé selon la revendication 1 ou 2, **caractérisé en ce que** l'élément de raccordement (3, 13, 21, 31, 42, 51) est, pendant la préfabrication d'une préforme de la base de jante (2), adjoint à un outil de moulage (10, 19, 54) de la base de jante (2) et qu'il est relié avec la préforme de préférence par adhérence de formes.

4. Procédé selon l'une des revendications 1 à 3, **caractérisé en ce qu'**est utilisé, pour l'élément de raccordement (3, 13, 31), un matériau qui présente un coefficient de dilatation thermique dans des proportions au moins comparables au coefficient de dilatation thermique du matériau composite à base de fibres composant la base de jante.

5. Procédé selon l'une des revendications précédentes, **caractérisé en ce que** l'élément de raccordement (3, 13, 21, 42, 51) est relié dans la zone profonde de la base de jante (2) avec la base la jante (2).

6. Procédé selon l'une des revendications précédentes, **caractérisé en ce que** l'élément de raccordement (3, 21, 31, 42, 51) est configuré et disposé s'étendant dans une cavité creuse de la jante (1).

7. Procédé selon l'une des revendications 3 à 6, **caractérisé en ce que** l'élément de raccordement (3, 13, 21, 31, 42, 51) est adjoint à un évidement correspondant (11, 20, 55) de l'outil de moulage (10, 19, 54).

8. Procédé selon l'une des revendications précédentes, **caractérisé en ce que** l'élément de raccordement (21, 31) est formé à partir de matière plastique renforcée de fibre de verre (GFK).

9. Procédé selon l'une des revendications précédentes, **caractérisé en ce que** dans la zone de jonction entre la zone de jante (2) et l'élément de raccordement (13, 42) est configurée une couche intermédiaire (18, 50).

10. Procédé selon l'une des revendications précédentes, **caractérisé en ce que** sur la surface de raccordement de l'élément de raccordement est formée une couche intermédiaire.

11. Procédé selon la revendication 9 ou la revendication 10, **caractérisé en ce que** la couche intermédiaire (18) est formée d'un matériau présentant une résistance à la conductivité thermique proportionnellement plus élevée que la résistance à la conductivité thermique de l'élément de raccordement (13).

12. Procédé selon l'une des revendications précédentes, **caractérisé en ce que** l'élément de raccordement (21, 31) est formé d'un matériau présentant une résistance à la conductivité thermique proportionnellement plus élevée que la résistance à la conductivité thermique du matériau du disque de roue (22, 36) à raccorder.

13. Procédé selon l'une des revendications précédentes, **caractérisé en ce que** pendant la fabrication de la base de jante (2), un élément de raccordement (31) en plusieurs parties est relié à la base de jante (2).

14. Procédé selon l'une des revendications précédentes, **caractérisé en ce que** pendant la fabrication de la base de jante (2), plusieurs éléments de raccordement (51) disposés de préférence autour de la jante (1) sont reliés avec la base de jante (2).
